# NEUE EUROPÄISCHE PATENTSCHRIFT

(11) **EP 2 026 106 B2**
(45) Veröffentlichungstag und Bekanntmachung des Hinweises auf die Entscheidung über den Einspruch: **04.03.2015**
(45) Hinweis auf die Patenterteilung: 15.06.2011
(21) Anmeldenummer: 07015136.0
(22) Anmeldetag: 02.08.2007
(51) Int. Cl.: G01V 11/00

(54) **Verfahren zur georeferenzierten Darstellung von mittels Bodendetektoren ermittelten Messwerten eines Messfeldes sowie Detektor zur Anwendung**
Method for geo-referenced representation of measuring values of a measuring field determined using ground detectors and detector for use
Procédé destiné à la représentation géoréférencée de valeurs de mesure calculées à l'aide de détecteurs au sol d'un champ de mesure et détecteur destiné à l'utilisation

(43) Veröffentlichungstag der Anmeldung: 18.02.2009
(73) Patentinhaber: Vallon GmbH, 72800 Eningen (DE)
(72) Erfinder: Kühner, Jens, 72762 Reutlingen (DE)
(74) Vertreter: Klocke, Peter

(56) Entgegenhaltungen:
- EP-A- 1 693 642
- EP-A- 1 693 687
- DE-A1-102004 057 855
- US-A- 6 044 324
- US-A1- 2004 158 403
- US-A1- 2006 055 584

## Beschreibung

Die Erfindung betrifft ein Verfahren zur grafischen Darstellung von mittels eines oder mehreren Bodendetektoren detektierten Gegenständen eines Messfeldes in einer Rechnereinheit mit Visualisierungseinheit und einen Bodendetektor mit einer entsprechenden Rechnereinheit zur Anwendung des Verfahrens. Unter Bodendektoren werden in diesem Zusammenhang Metall- oder Eisendetektoren zur Ortung von Metallgegenständen verstanden, sowie Bodenradardetektoren zur Feststellung beliebiger erfassbarer Gegenstände.

Detektoren zum Auffinden von Gegenständen, vorzugsweise zum Lokalisieren von metallenen, ferromagnetischen oder sonstigen Störkörpern im Erdboden oder im Wasser sind an sich bekannt. Metall- und Eisendetektoren nutzen lokale Verzerrrungen des Erdmagnetfeldes, die durch ferromagnetische oder andere metallische Störkörper verursacht werden, zu deren Ortung, während ein Bodenradar, unter den Bezeichnungen EMR, GPR oder RES bekannt, Anomalien in einer reflektierten elektromagnetischen Strahlung zur Ortung verwendet, die von Störkörpern beliebigen Materials verursacht werden. Entsprechende Störkörper können dabei in Abhängigkeit von der Größe, dem Material aus dem sie hergestellt sind, sowie des magnetischen Zustands bis in große Tiefen lokalisiert werden.

Bei Flächensondierungen, sogenannten Feldmessungen, beispielsweise mit Metall- und Eisendetektoren, wird zur Detektion von Metallgegenständen ein markiertes Messfeld, dessen Fläche in Messspuren eingeteilt ist, abgegangen oder abgefahren. Die Messungen erfolgen dabei in bestimmten regelmäßigen Zeit- oder Ortsabständen entlang den Messspuren, wobei die ermittelten Messwerte der jeweiligen Messposition zugeordnet als Messwerte festgehalten werden, die eine Profillinie der Messspuren bilden, um eine anschließende Auswertung und Interpretation zu ermöglichen. Inzwischen ist es üblich, die Messwerte zur Dokumentation und für eine spätere computergestützte Auswertung elektronisch zu speichern.

Die einzelnen Profillinien ergeben nebeneinander angeordnet eine flächendeckende Kartierung des Messfeldes. Eine derartige Darstellung der Messergebnisse ist unübersichtlich und erfordert für die Interpretation eine große Erfahrung.

Der Erfindung liegt daher die Aufgabe zu Grunde, eine Möglichkeit vorzuschlagen, die die Messwerte der Feldmessung automatisch in einer übersichtlichen Weise georeferenziert darstellt.

Diese Aufgabe wird erfindungsgemäß durch ein Verfahren mit den Merkmalen des Anspruchs 1 sowie einen Detektor mit den Merkmalen des Anspruchs 6 gelöst. Weitere vorteilhafte Ausgestaltungen des Verfahrens sind den rückbezogenen Unteransprüchen zu entnehmen.

Bei dem erfindungsgemäßen Verfahren wird zuerst jeder von einem oder mehreren Bodendetektoren, beispielsweise mit Metall- und Eisendetektoren gemessene Wert eines untersuchten Messfeldes mit seiner Position elektronisch gespeichert. Anschließend werden mittels der gespeicherten Messwerte detektierte Messobjekte identifiziert und die Messwerte von identifizierten Messobjekten diesen zugeordnet gruppiert und geordnet und den jeweiligen identifizierten Messobjekten zugeordnete Messwerte mit bestimmter ähnlicher Messintensität zu zusammenhängenden Datenstrukturen verbunden. Den einzelnen abgespeicherten Messwerten und den erzeugten zusammenhängenden Datenstrukturen werden dabei mindestens eine Georeferenz eines Georeferenzsystems zugewiesen, die vorzugsweise den geografischen Ortsdaten des identifizierten Messobjekts entsprechen. Dann werden die zusammenhängenden Datenstrukturen mit einer bestimmten, ähnlichen Messintensität für jeweils ein identifiziertes Messobjekt in einer vorgegebenen Reihenfolge angeordnet neu abgespeichert, wobei ein geeignetes Datenformat für die Weiterverarbeitung der Messwerte gewählt wird. Zum Schluss werden die georeferenzierten zusammenhängenden Datenstrukturen in einem grafischen Informationssystem mit den Daten einer Erdoberflächenaufnahme verknüpft und auf einer Visualisierungseinheit der Rechnereinheit abgebildet. Dabei werden zu einer dem Messfeld überlagerten grafischen Darstellung der detektierten Metallgegenstände die georeferenzierten, zusammenhängenden Datenstrukturen als Polygonzüge und/oder gefüllte Polygonflächen der Erdoberflächenaufnahme überlagert dargestellt.

Bei dem erfindungsgemäßen Verfahren können die von einem Detektor ermittelten Messwerte entweder direkt in einer Rechnereinheit gespeichert werden, die später eine computergestützte Auswertung und Anzeige der Feldmessung vornimmt, oder auf einem Zwischenspeicher, beispielsweise einem Daten-Logger, der nach der Feldmessung die ermittelten Messwerte an eine geeignete Rechnereinheit übergibt. Als Rechnereinheit kann beispielsweise ein PDA, ein Laptop oder ein Desktop PC verwendet werden.

Die mindestens eine Georeferenz für die Messwerte kann bereits bei der Detektion mit den ermittelten Messwerten abgespeichert oder zu einem späteren Zeitpunkt durch eine Verknüpfung mit entsprechenden gespeicherten oder anderweitig festgehaltenen Messpositionen sowie von einer bekannten Startposition ausgehend berechneten Messpositionen hergestellt werden. Für eine vollautomatische Ortsdatenbestimmung ist ein satellitengestütztes Navigationssystem, beispielsweise GPS, besonders geeignet. Ein solches Navigationssystem ist mit der Auswerteelektronik des Detektors koppelbar, die die jeweiligen Messwerte zusammen mit den augenblicklichen Ortsdaten zur Speicherung, beispielsweise an einen Daten-Logger übergibt.

Anhand der Messwerte werden detektierte Metallgegenstände identifiziert und die Messwerte als Messwertgruppen einem identifizierten Messobjekt zugeordnet. Dabei werden die Messwerte, deren Messpositionen um ein Zentrum angeordnet sind, das von dem identifizierten Messobjekt gebildet ist, und eine bestimmte ähnliche Messintensität aufweisen, zu einer zusammenhängenden Datenstruktur zusammengefasst. Eine solche Datenstruktur kann als Polygonzug oder als Polygonfläche auf einer Visualisierungseinheit der auswertenden Rechnereinheit abgebildet werden. Dabei ist es zweckmäßig, den Polygonzügen oder -flächen unterschiedlicher Messintensität unterschiedliche Farben zuzuordnen, deren Farbintensität vorzugsweise mit steigender Messintensität zunimmt.

Die georeferenzierten, zusammenhängenden Datenstrukturen werden in einem grafischen Informationssystem der Rechnereinheit mit den Daten einer Erdoberflächenaufnahme verknüpft und zur Anzeige gebracht. Hierzu werden die Polygonzüge oder -flächen bestimmter Messintensität mit der zugeordneten Position dem Abbild der Erdoberfläche in Folge ortgenau überlagert. Dabei spielt die Reihenfolge der Überlagerung, zumindest bei einer farblich gefüllten Polygonflächen eine wesentliche Rolle. Solche Polygonflächen müssen mit zunehmender Messintensität übereinander und über der Erdoberflächenaufnahme bei der Visualisierung angeordnet werden, da die zusammenhängenden Datenstrukturen mit zunehmender Messintensität eine geringere Flächenerstreckung aufweisen. Bei einer umgekehrten Anordnung würden die größeren Polygonflächen die kleineren Polygonflächen abdecken. Dazu ist es wichtig, dass die zusammenhängenden Datenstrukturen in einer vorgegebenen Reihenfolge angeordnet abgespeichert sind und ein von einem grafischen Informationssystem lesbares Datenformat aufweisen. Dabei können zusammenhängende Datenstrukturen, die unterschiedlichen identifizierten Messobjekten zugeordnet sind und eine vergleichbare Messintensität zeigen, auch als eine gemeinsame, übergreifende Datenstruktur gespeichert sein.

Die Verknüpfung der Polygonzüge oder Polygonflächen in einem grafischen Informationssystem (GIS) mit den Daten einer Erdoberflächenaufnahme kann in einfacher Weise, beispielsweise mit Google-Earth-Ansichten mit Hilfe von KML, dem Dateiformat von Google Earth, erfolgen. Google Earth ist wie die meisten anderen Betrachter nicht in der Lage, mit einer Vielzahl von einzelnen Punkten umzugehen. Solche Betrachter können in der Regel nur Linien oder Flächen zeichnen. Daher ist es erforderlich, für die Erzeugung der zusammenhängenden Datenstrukturen Isolinien oder Isoflächen zu bilden, die in ein solches grafisches Informationssystem importierbar sind. Entsprechende Algorithmen sind unter den Bezeichnungen "Marching Cubes" oder dem 2D-Äquivalent "Marching Squares" bekannt und beispielsweise in den Patentschriften US 4,710,876, US 4,885,688 bzw. US 7,006,106 beschrieben.

In gleicher Weise kann das Messfeld mit seinen Messspuren mit den Daten der Erdoberflächenaufnahme verknüpft und in dem grafischen Informationssystem mit abgebildet werden. Dabei werden diese zuerst in dem grafischen Informationssystem abgebildet, auf die dann in verschiedenen Ebenen die georeferenzierten, zusammenhängenden Datenstrukturen bestimmter Messintensität folgen, bei denen diejenigen Datenstrukturen mit betragsmäßig geringeren Messwerten jeweils zuerst in dem grafischen Informationssystem abgebildet werden. Dazu werden vorzugsweise die Positionsdaten der Messpunkte in der Reihenfolge ihrer Erfassung mit den georeferenzierten Polygonzügen und/oder gefüllten Polygonflächen verknüpft und als Linienzüge dargestellt. Bevorzugt wird außerdem eine Ausführungsform des erfindungsgemäßen Verfahrens, bei dem die Georeferenz einer Gruppe von Messwerten zugeordnet wird, wobei idealerweise für alle Datenstrukturen eines identifizierten Messobjektes eine gemeinsame Georeferenz verwendet wird.

Bei dem erfindungsgemäßen Bodendetektor mit einer Rechnereinheit zur Darstellung von detektierten Gegenständen, vorzugsweise Metallgegenständen bei der Anwendung des vorstehend beschriebenen Verfahrens, bei dem Messwerte gleicher Messintensität als zusammenhängende Datenstrukturen in Form von Polygonzügen und/oder Polygonflächen dargestellt werden und den einem identifizierten Messobjekt zugeordneten Datenstrukturen mit den zugehörigen Messwerten mindestens eine Georeferenz eines Georeferenzsystems zugewiesen wird und die jeweiligen georeferenzierten Polygonzüge und/oder Polygonflächen einem Abbild der Erdoberfläche überlagert abgebildet werden, umfasst die Rechnereinheit mindestens Folgendes:
- ein erstes Speichermittel, das die Messwerte der jeweiliger Detektoren und die jeweilige Detektorposition einander zugeordnet speichert;
- ein erstes Programmmodul, das mittels der gespeicherten Messwerte detektierte Messobjekte identifiziert, die Messwerte von identifizierten Messobjekten als Messwertgruppe diesem zugeordnet zusammenfasst und für ein identifiziertes Messobjekt zusammenhängende Datenstrukturen erzeugt;
- ein zweites Programmmodul, das den zusammenhängenden Datenstrukturen mindestens eine Georeferenz zuordnet;
- ein zweites Speichermittel, das die jeweiligen zusammenhängenden Datenstrukturen gleicher oder bestimmter ähnlicher Messintensität in einer vorgegebenen Reihenfolge angeordnet in einem zur Weiterverarbeitung geeigneten Datenformat abspeichert;
- eine Visualisierungseinheit, das die georeferenzierten zusammenhängenden Datenstrukturen einer Erdoberflächenaufnahme überlagert darstellt; und
- ein grafisches Informationssystem, das die georeferenzierten zusammenhängenden Datenstrukturen mit den Daten der Erdoberflächenaufnahme verknüpft und der Oberflächenaufnahme überlagert als Polyconzüge und/oder gefüllte Polygonflächen abbildet.

Die Daten der Erdoberflächenaufnahme können entweder direkt vom Internet eingelesen werden oder zuvor in einem Speicher abgelegt sein.

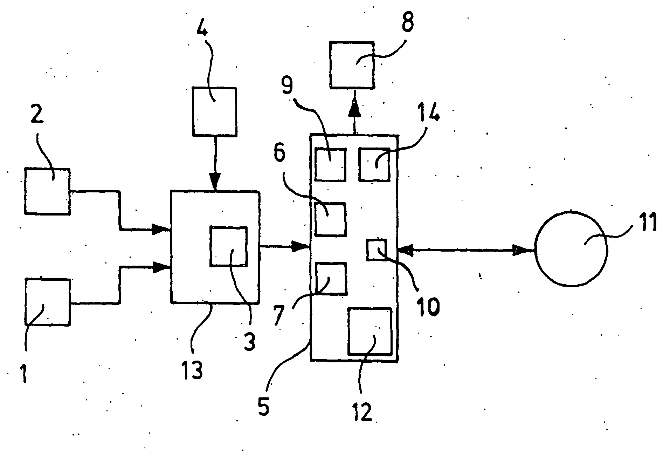

Nachfolgend wird die Erfindung anhand eines Ausführungsbeispiels eines kombinierten Metall-/Eisendetektors näher erläutert. Weitere Merkmale der Erfindung ergeben sich aus der beigefügten Zeichnung und der Beschreibung des Ausführungsbeispiels in Verbindung mit den Ansprüchen. Die einzelnen Merkmale der Erfindung können für sich allein oder zu mehreren bei verschiedenen Ausführungsformen der Erfindung realisiert sein. Die einzige Figur zeigt die Erfindung in einer schematischen Darstellung als Blockdiagramm.

Je ein Eisendetektor 1 und ein Metalldetektor 2 sind mit einem ersten Speichermittel 3 gekoppelt, das Teil eines als Daten-Logger betriebenen PDAs 13 ist. Die Detektoren 1, 2 übertragen ihre jeweiligen Messdaten an den PDA 13, der auch Ortsdaten der Detektoren 1, 2 den Messwerten zugeordnet speichert. Dazu ist der PDA 13 mit einem satellitengestützten Navigationssystem 4 verbunden, das die Ortsdaten der Detektoren 1, 2 liefert.

Die in dem ersten Speichermittel 2 gespeicherten Messwerte und sowie die jeweils zugeordneten Ortsdaten der Detektoren 1, 2 werden zur späteren computergestützten Auswertung an einen Personal Computer 5 übertragen, der aus den Messwerten zusammenhängende Datenstrukturen mit bestimmter ähnliche Messintensität erzeugt und in einer vorgegebenen Reihenfolge angeordnet, in einem für die Weiterverarbeitung geeigneten Datenformat in einem zweiten Speichermittel 6 abspeichert, wobei das Speichermittel 6 Teil des Personal Computers 5 ist. Dazu weist der Personal Computer 5 ein erstes Programmmodul 7 auf.

Zur ortsgenauen Visualisierung auf einer Visualierungseinheit 8, beispielsweise einen Computerbildschirm der mit dem Personal Computer 5 verbunden ist, ordnet ein zweites Programmmodul 9 den zusammenhängenden Datenstrukturen in Form von Polygonzügen und/oder Polygonflächen eine Georeferenz mit Hilfe der den Messwerten zugeordnet abgespeicherten Ortsdaten zu.

Der Personal Computer 5 weist außerdem eine Schnittstelle 10 zum Internet 11 auf, von dem er Erdoberflächenaufnahmen bezieht und in einem Speicher 12 ablegt. Mittels einem grafischen Informationssystem 14, vorzugsweise Google-Earth, werden die Daten der Erdoberflächenaufnahme auf dem Bildschirm 8 dargestellt und mit den georeferenzierten, zusammenhängenden Datenstrukturen überlagert.

## Patentansprüche

1. Verfahren zur Darstellung von mittels eines oder mehrerer Bodendetektoren (1, 2) detektierten Gegenständen, vorzugsweise Metallgegenständen, eines Messfeldes in einer Rechnereinheit (5) mit einer Visualisierungseinheit (8), in dem
jeder von dem jeweiligen Detektor (1, 2) gemessene Wert eines untersuchten Messfeldes mit seiner Position gespeichert wird,
mittels der gespeicherten Messwerte detektierte Messobjekte identifiziert werden,
die Messwerte von identifizierten Messobjekten als Messwertgruppe diesem zugeordnet zusammengefasst werden,
die Messwerte der Messwertgruppe eines identifizierten Messobjekts mit gleicher, oder mit bestimmter ähnlicher Messintensität zu zusammenhängenden Datenstrukturen verbunden werden,
den erzeugten Datenstrukturen des identifizierten Messobjekts mindestens eine Georeferenz eines Georeferenzsystems zugewiesen wird,
die zusammenhängenden Datenstrukturen mit bestimmter ähnlicher Messintensität in einer vorgegebenen Reihenfolge angeordnet in einem zur Weiterverarbeitung geeigneten Datenformat abgespeichert werden, und
anschließend die georeferenzierten, zusammenhängenden Datenstrukturen in einem grafischen Informationssystem (GIS) mit den Daten einer Erdoberflächenaufnahme verknüpft und die Erdoberflächenaufnahme mit den georeferenzierten, zusammenhängenden Datenstrukturen als Polygonzüge und/oder gefüllte Polygonflächen auf der Visualisierungseinheit (8) der Rechnereinheit (5) abgebildet wird.

2. Verfahren nach Anspruch 1, **dadurch gekennzeichnet, dass** aus den Messwerten Isolinien zur Erzeugung der zusammenhängenden Datenstrukturen gebildet werden.

3. Verfahren nach Anspruch 1, **dadurch gekennzeichnet, dass** zum Integrieren der georeferenzierten, zusammenhängenden Datenstrukturen mit anschließendem Darstellen die bestimmten Datenstrukturen mit betragsmäßig geringeren Messwerten jeweils zuerst in dem grafischen Informationssystem abgebildet werden.

4. Verfahren nach einem der vorangegangenen Ansprüche, **dadurch gekennzeichnet, dass** die Positionsdaten der Messpunkte in der Reihenfolge ihrer Erfassung mit den georeferenzierten Polygonzügen und/oder gefüllten Polygonflächen verknüpft und als Linienzüge dargestellt werden.

5. Verfahren nach einem der vorangegangenen Ansprüche, **dadurch gekennzeichnet, dass** den Datenstrukturen eines identifizierten Messobjekts eine gemeinsame Georeferenz zugeordnet wird.

6. Bodendetektor (1, 2) mit einer Rechnereinheit (5) zur Darstellung von detektierten Gegenständen, vorzugsweise Metallgegenständen, bei dem Messwerte gleicher Messintensität als zusammenhängende Datenstrukturen in Form von Polygonzügen und/oder Polygonflächen dargestellt werden und den einem identifizierten Messobjekt zugeordneten Datenstrukturen mindestens eine Georeferenz eines Georeferenzsystems zugewiesen wird, und die georeferenzierten Polygonzüge und/oder Polygonflächen einem Abbild der Erdoberfläche überlagert abgebildet werden, wobei die Rechnereinheit (5) mindestens Folgendes umfasst:
Ein erstes Speichermittel (3), das die Messwerte der jeweiligen Detektoren (1, 2) und die jeweilige zugehörige Detektorposition einander zugeordnet speichert,
ein erstes Programmmodul (7), das mittels der gespeicherten Messwerte detektierte Messobjekte identifiziert, die Messwerten von identifizierten Messobjekten als Messwertgruppe diesem zugeordnet zusammenfasst und aus Messwerten gleicher oder bestimmter ähnlicher Messintensität für ein identifiziertes Messobjekt zusammenhängende Datenstrukturen erzeugt,
ein zweites Programmmodul (9), das den zusammenhängenden Datenstrukturen mindestens eine Georeferenz zuordnet,
ein zweites Speichermittel (6), das die jeweiligen zusammenhängenden Datenstrukturen gleicher oder bestimmter ähnlicher Messintensität in einer vorgegebenen Reihenfolge angeordnet in einem zur Weiterverarbeitung geeigneten Datenformat abspeichert,
eine Visualisierungseinheit (8), das die georeferenzierten zusammenhängenden Datenstrukturen einer Erdoberflächenaufnahme überlagert darstellt, und
ein grafisches Informationssystem (14), das die georeferenzierten zusammenhängenden Datenstrukturen mit den Daten der Erdoberflächenaufnahme verknüpft und der Oberflächenaufnahme überlagert als Polygonzüge und/oder gefüllte Polygonflächen abbildet.

## Claims

1. Method for the graphic representation in a computer unit (5) with a display unit (8) of objects of an area of measurement, preferably metal objects, that were detected by means of one or a plurality of ground detectors (1, 2), wherein
each measured datum of an examined area of measurement measured by a detector (1, 2) is stored with its position,
the stored data are used to identify detected objects,
the data of identified detected objects are combined in data groups that are associated with said object,
coherent data structures are generated from the data of the data group of a identified detected object with equal or certain similar measuring intensity,
at least one georeference of a georeference system is assigned to the generated data structures associated with the identified object,
the coherent data structures with a certain similar measuring intensity, arranged in a given sequence, are stored in a data format suitable for further processing, and
wherein, following this, the georeferenced coherent data structures are linked to the data of an earth surface image in a graphic information system (GIS), and the earth surface image with the georeferenced coherent data structures is displayed on the display unit (8) of the computer unit (5) as polygon courses and/or filled polygon areas.

2. Method according to claim 1, **characterized in that** isolines are formed from the data for generating the coherent data structures.

3. Method according to claim 1, **characterized in that**, for integrating the georeferenced coherent data structures, followed by their display, the generated data structure with measured data of lower value is displayed first in the graphic information system.

4. Method according to any of the preceding claims, **characterized in that** the position data of the measuring points are displayed in the sequence of their detection, linked to the georeferenced polygon courses and/or filled polygon areas, and in the form of a continuous series of lines.

5. Method according to any of the preceding claims, **characterized in that** a common georeference is associated with the data structures of an identified object.

6. Ground detector (1, 2) with a computer unit (5) for representing detected objects, preferably metal objects, wherein data of equal measuring intensity are shown as coherent data structures in the form of polygon courses and/or polygon areas, and wherein at least one georeference of a georeference system is assigned to the data structures of an associated identified object, and wherein the georeferenced polygon courses and/or polygon areas are displayed superimposed on an image of the earth surface, with the computer unit (5) including at least the following items:
A first storage device (3) that stores the measured data of each detector (1, 2) and each related detector position in association with each other,
a first program module (7) that identifies detected objects by means of the stored data, combines the data of identified detected objects in data groups that are associated with said object, and generates coherent data structures for an identified detected object from data of equal or certain similar measuring intensity,
a second program module (9) that assigns at least one georeference to the data or the coherent data structures,
a second storage device (6) that stores the respective coherent data structures with equal or certain similar measuring intensity arranged in a given sequence in a data format that is suitable for further processing,
a display unit (8) that displays the georeferenced coherent data structures superimposed on an earth surface image, and
a graphic information system (14) that links the georeferenced coherent data structures with the data of the earth surface image and displays them as polygon courses and/or polygon areas superimposed on the earth surface image.

## Revendications

1. Procédé de représentation d'objets, de préférence d'objets métalliques, d'un champ de mesure, détectés au moyen d'un ou plusieurs détecteurs au sol (1, 2), dans une unité de calcul (5) avec une unité de visualisation (8), dans lequel
chaque valeur mesurée par le détecteur respectif (1, 2) d'un champ de mesure exploré est mémorisée avec sa position,
les objets de mesure détectés sont identifiés au moyen des valeurs mesurées mémorisées,
les valeurs mesurées d'objets de mesure identifiés sont réunies sous forme de groupes de valeurs mesurées associés à ceux-ci,
les valeurs mesurées du groupe de valeurs mesurées d'un objet de mesure identifié ayant une intensité mesurée égale ou d'une similitude définie sont réunies en structures de données cohérentes,
au moins une géoréférence d'un système de géoréférencement est associée aux structures de données générées de l'objet de mesure identifié,
les structures de données cohérentes avec une intensité mesurée d'une similitude définie sont mémorisées, disposées dans un ordre prédéfini, dans un format adapté à un traitement ultérieur et
les structures de données cohérentes géoréférencées sont ensuite combinées avec les données d'une prise de vues de la surface terrestre dans un système d'informations graphiques (GIS) et la prise de vues de la surface terrestre est représentée avec les structures de données cohérentes géoréférencées sous la forme de tracés polygonaux et/ou de surfaces polygonales remplies sur l'unité de visualisation (8) de l'unité de calcul (5).

2. Procédé selon la revendication 1, **caractérisé en ce que** des isolignes servant à générer les structures de données cohérentes sont formées à partir des valeurs mesurées.

3. Procédé selon la revendication 1, **caractérisé en ce que** pour l'intégration des structures de données cohérentes géoréférencées et ensuite leur représentation, les structures de données déterminées avec des valeurs mesurées plus faibles en valeur absolue sont chaque fois représentées en premier dans le système d'informations graphiques.

4. Procédé selon une des revendications précédentes, **caractérisé en ce que** les données de position des points de mesure sont combinés avec les tracés polygonaux et/ou surfaces polygonales remplies géoréférencés dans l'ordre de leur acquisition et représentées sous la forme de tracés linéaires.

5. Procédé selon une des revendications précédentes, **caractérisé en ce qu'**une géoréférence commune est associée aux structures de données d'un objet de mesure identifié.

6. Détecteur au sol (1, 2) avec une unité de calcul (5) pour la représentation d'objets détectés, de préférence d'objets métalliques, dans lequel des valeurs mesurées de même intensité mesurée sont représentées en tant que structures de données cohérentes sous la forme de tracés polygonaux et/ou surfaces polygonales et au moins une géoréférence d'un système de géoréférencement est affectée aux structures de données associées à un objet de mesure identifié, et les tracés polygonaux et/ou surfaces polygonales géoréférencés sont représentés superposés à une image de la surface terrestre, l'unité de calcul (5) comprenant au moins :
un premier moyen de mémorisation (3) qui mémorise, en les associant, les valeurs mesurées des détecteurs (1, 2) respectifs et la position correspondante des détecteurs respectifs,
un premier module de programme (7) qui identifie les objets de mesure au moyen des valeurs mesurées mémorisées, réunit les valeurs mesurées d'objets de mesure identifiés sous forme de groupes de valeurs mesurées associés à ceux-ci et génère des structures de données cohérentes à partir des valeurs mesurées d'intensité mesurée égale ou d'une similitude définie pour un objet de mesure identifié,
un deuxième module de programme (9) qui associe au moins une géoréférence aux structures de données cohérentes,
un deuxième moyen de mémorisation (6) qui mémorise les structures de données cohérentes ayant une intensité mesurée égale ou d'une similitude définie, disposées dans un ordre prédéfini, dans un format de données adapté à un traitement ultérieur,
une unité de visualisation (8) qui représente les structures de données cohérentes géoréférencées superposées à une prise de vues de la surface terrestre, et
un système d'information graphique (14) qui combine les structures de données cohérentes géoréférencées avec les données de la prise de vues de la surface terrestre et les représente, superposées à la prise de vues de la surface, sous la forme de tracés polygonaux et/ou de surfaces polygonales remplies.
